# EUROPEAN PATENT APPLICATION

(11) **EP 1 667 354 A1**
(43) Date of publication of application: **07.06.2006**
(21) Application number: 04771407.6
(22) Date of filing: 03.08.2004
(51) Int. Cl.: H04L 7/08, H04L 7/00, H04L 12/28

(54) **COMMUNICATION SYSTEM AND METHOD, INFORMATION PROCESSING APPARATUS AND METHOD, AND PROGRAM**

(30) Priority: 17.09.2003 JP 2003324919
(71) Applicant: SONY CORPORATION, Tokyo 141-0001 (JP)
(72) Inventor: OOI, Takuya, c/o SONY CORPORATION, Tokyo 1410001 (JP)
(74) Representative: Pilch, Adam John Michael
(86) International application number: PCT/JP2004/011420
(87) International publication number: WO 2005/029761

(57) **Abstract**

The present invention relates to a communications system and method, an information processing apparatus and method, as well as a program, which make it possible to perform highly precise clock synchronization with ease. A synchronization master apparatus 12 generates a synchronization control frame at t1, waits for duration A1, starts transmission of the synchronization control frame at t2 at which point the value of the clock counter register becomes "0," and resets the clock counter register at t3 at which point transmission of the synchronization control frame is completed. On the other hand, a synchronization slave apparatus 13 starts reception of the synchronization control frame at the same timing as t2, completes reception of the synchronization control frame at the same timing as t3, and resets the clock counter register. The present invention may be applied to an AV data communications system that transmits and receives real time data such as video data, audio data and the like.

## Description

### TECHNICAL FIELD

The present invention relates to a communications system and method, to an information processing apparatus and method, and to a program, and relates, in particular, to a communications system and method, an information processing apparatus and method, and a program in which it is made possible to perform highly precise clock synchronization.

### BACKGROUND ART

Conventionally, in CSMA/CD (Carrier Sense Multiple Access with Collision Detection) or CSMA/CA (Carrier Sense Multiple Access with Collision Avoidance) scheme networks, such as EtherNet (trademark) and IEEE 802.11 wireless LAN (Local Area Network), in principle, the timing at which network frames are transmitted is not guaranteed to start precisely in a timing of given intervals or in a particular timing. This is due to the effects of the carrier sense time for determining the transmission timing and the random back off time accompanying collision.

For this reason, between devices connected to a network, it was difficult to perform highly precise clock synchronization by using network frames.

Therefore, a communications system is proposed, as disclosed in Japanese Patent Application Publication No. 2000-332802, where the clocks of the transmitting end and the receiving end are synchronized by adding a time stamp to transmission data, and based on this time stamp, detecting the difference between the clock of the transmitting end and its own clock on the receiving end, and then controlling the frequency of its own clock.

However, in the communications system described above, in order to synchronize the clocks of the transmitting and receiving ends, it is necessary to install dedicated hardware, such as a voltage-controlled variable frequency oscillator, on the receiving end. Therefore, there has been a problem in that in order to implement the communications system described above, it should start with hardware design, and implementation has not been easy. Further, there has been a problem in that the cost of the dedicated hardware installed in the communications system described above has been incurred.

### DISCLOSURE OF THE INVENTION

The present invention is made in view of such circumstances, and is one that makes it possible to perform highly precise clock synchronization with ease.

In a communications system of the present invention, a first information processing apparatus has a transmission clock counter that counts an internal transmission clock, generation means that generates, in a predetermined cycle, synchronization control data that instructs a reset of the value of a reception clock counter that counts an internal reception clock of a second information processing apparatus, transmission means that transmits the synchronization control data generated by the generation means to the first information processing apparatus, and transmission resetting means that resets the value of the transmission clock counter after transmission of the synchronization control data by the transmission means is completed; and the second information processing apparatus has the reception clock counter, data determining means that determines whether or not the receive data is the synchronization control data, and reception resetting means that resets the value of the reception clock counter if it is determined by the data determining means that the data is the synchronization control data.

The transmission clock counter and the reception clock counter may be such that they count values in the same range.

The first information processing apparatus further has counter determining means that determines whether or not the value of the transmission clock counter has become zero, wherein if it is determined by the counter determining means that the value of the transmission clock counter has become zero, the transmission means transmits the synchronization control data generated by the generation means to the second information processing apparatus.

A communications method of the present invention is characterized in that a communications method of a first information processing apparatus generates synchronization control data that instructs a reset of the value of a reception clock counter that counts an internal reception clock of a second information processing apparatus, transmits the generated synchronization control data to the second information processing apparatus, and resets the value of a transmission clock counter that counts an internal transmission clock after transmission of the synchronization control data is completed; and a communications method of the second information processing apparatus determines whether or not data that is received is the synchronization control data, and resets the value of the reception clock counter if it is determined that the data is the synchronization control data.

A first information processing apparatus of the present invention is characterized by having a clock counter that counts an internal clock, generation means that generates, in a predetermined cycle, synchronization control data that instructs a reset of the value of a clock counter of another information processing apparatus, control data transmission means that transmits the synchronization control data generated by the generation means to the another information processing apparatus, and reset means that resets the value of the clock counter after transmission of the synchronization control data by the control data transmission means is completed.

The clock counter is such that it counts values in the same range as the clock counter of the another information processing apparatus.

Counter determining means that determines whether or not the value of the clock counter has become zero is further provided, wherein if it is determined by the counter determining means that the value of the clock counter has become zero, the control data transmission means transmits the synchronization control data generated by the generation means to the another information processing apparatus.

Further, adding means that adds to the header of the data, based on the value of the clock counter, a counter value indicating the timing at which the another information processing apparatus processes data, and data transmission means that transmits to the another information processing apparatus the data to which the counter value has been added by the adding means are provided.

Further, acquisition means that acquires a counter value, which indicates the timing at which data is processed, added by the another information processing apparatus, time determining means that determines whether or not the value of the clock counter has reached the counter value acquired by the acquisition means, and data processing means that processes data if it is determined by the time determining means that the value of the clock counter has reached the counter value are provided.

A first information processing method of the present invention is characterized by including a generation step that generates, in a predetermined cycle, synchronization control data that instructs a reset of the value of a clock counter of an information processing apparatus, a control data transmission step that transmits the synchronization control data generated by the process of the generation step to the information terminal apparatus, and a reset step that resets the value of a clock counter that counts an internal clock after transmission of the synchronization control data by the process of the control data transmission step is completed.

A first program of the present invention is characterized by including a generation step that generates, in a predetermined cycle, synchronization control data that instructs a reset of the value of a clock counter of an information processing apparatus, a control data transmission step that transmits the synchronization control data generated by the process of the generation step to the information terminal apparatus, and a reset step that resets the value of a clock counter that counts an internal clock after transmission of the synchronization control data by the process of the control data transmission step is completed.

A second information processing apparatus of the present invention is characterized by having a clock counter that counts an internal clock, data determining means that determines whether or not data that is received is synchronization control data, which instructs a reset of the value of the clock counter at the same time as a reset of the value of a clock counter of another information processing apparatus, and reset means that resets the value of the clock counter if it is determined by the data determining means that the data is the synchronization control data.

The clock counter counts values in the same range as the clock counter of the another information processing apparatus.

Further, adding means that adds to the header of the data, based on the value of the clock counter, a counter value indicating the timing at which the another information processing apparatus processes data, and data transmission means that transmits to the another information processing apparatus the data to which the above-mentioned counter value has been added by the adding means are provided.

Further, acquisition means that acquires a counter value, which indicates the timing at which data is processed, added by the another information processing apparatus, time determining means that determines whether or not the value of the clock counter has reached the counter value acquired by the acquisition means, and data processing means that processes data if it is determined by the time determining means that the value of the clock counter has reached the counter value are provided.

A second information processing method of the present invention is characterized by including a data determining step that determines if the data that is received is synchronization control data, which instructs, at the same time as a reset of the value of a clock counter of an information processing apparatus, a reset of the value of a clock counter that counts an internal clock, and a reset step that resets the value of the clock counter if it is determined by the process of the data determining step that the data is the synchronization control data.

A second program of the present invention is characterized by including a data determining step that determines if data that is received is synchronization control data, which instructs, at the same time as a reset of the value of a clock counter of an information processing apparatus, a reset of the value of a clock counter that counts an internal clock, and a reset step that resets the value of the clock counter if it is determined by the process of the data determining step that the data is the synchronization control data.

In the first invention, by the first information processing apparatus or method, the synchronization control data, which instructs a reset of the value of the reception clock counter that counts the internal reception clock of the second information processing apparatus, is generated in a predetermined cycle, the generated synchronization control data is transmitted to the second information processing apparatus, and the value of the transmission clock counter that counts the internal transmission clock is reset after transmission of the synchronization control data is completed. In addition, by the second information processing apparatus or method, it is determined whether or not the data received is the synchronization control data, and the value of the reception clock counter is reset if it is determined that the data is the synchronization control data.

In the second invention, the synchronization control data, which instructs the reset of the value of the clock counter of the other information processing apparatus, is generated in a predetermined cycle, the generated synchronization control data is transmitted to the another information processing apparatus, and the value of the clock counter that counts the internal clock is reset after transmission of the synchronization control data is completed.

In the third invention, it is determined if the data received is the synchronization control data, which instructs, at the same time as the reset of the value of the clock counter of the another information processing apparatus, the reset of the value of the clock counter that counts the internal clock, and the value of the clock counter is reset if it is determined that the data is the synchronization control data.

The term network refers to a mechanism in which at least two apparatuses are connected, and information can be communicated from one apparatus to the other apparatus. The apparatuses that communicate via the network may be independent apparatuses, or they may be internal blocks constituting an apparatus.

In addition, communications may refer to, besides wireless communications and wire communications, communications in which wireless communications and wire communications coexist, in other words, wireless communications may be carried out in certain zones and wireless communications in other zones. Further, communications from a certain apparatus to another apparatus may be carried out through wire communications, and communications from the another apparatus to the certain apparatus may be carried out through wireless communications.

### BRIEF DESCRIPTION OF THE DRAWINGS

Fig. 1 is a diagram showing a configuration example of an AV data communications system of the present invention;
Fig. 2 is a block diagram showing a configuration example of a synchronization master apparatus in Fig. 1;
Fig. 3 is a functional block diagram showing a functional configuration example of the synchronization master apparatus in Fig. 1;
Fig. 4 is a diagram showing a configuration example of an MPEG-TS packet;
Fig. 5 is a functional block diagram showing a detailed configuration example of a synchronization frame processing section in Fig. 2;
Fig. 6 is a diagram showing a data structure example of a data frame;
Fig. 7 is a block diagram showing a configuration example of a synchronization slave apparatus in Fig. 1;
Fig. 8 is a functional block diagram showing a functional configuration example of the synchronization slave apparatus in Fig. 1;
Fig. 9 is a flow chart illustrating a synchronization control frame transmission process of the synchronization master apparatus in Fig. 1;
Fig. 10 is a flow chart illustrating a synchronization control frame reception process of the synchronization slave apparatus in Fig. 1;
Fig. 11 is a timing chart illustrating a synchronization control frame transmission/reception process of the AV data communications system in Fig. 1;
Fig. 12 is a diagram showing another configuration example of the AV data communications system in Fig. 1;
Fig. 13 is a flow chart illustrating an MPEG data transmission process of the synchronization master apparatus in Fig. 1; and
Fig. 14 is a flow chart illustrating an MPEG data playing process of the synchronization slave apparatus in Fig. 1.

### BEST MODES FOR CARRYING OUT THE INVENTION

Hereinafter, embodiments of the present invention are described with reference to the drawings.

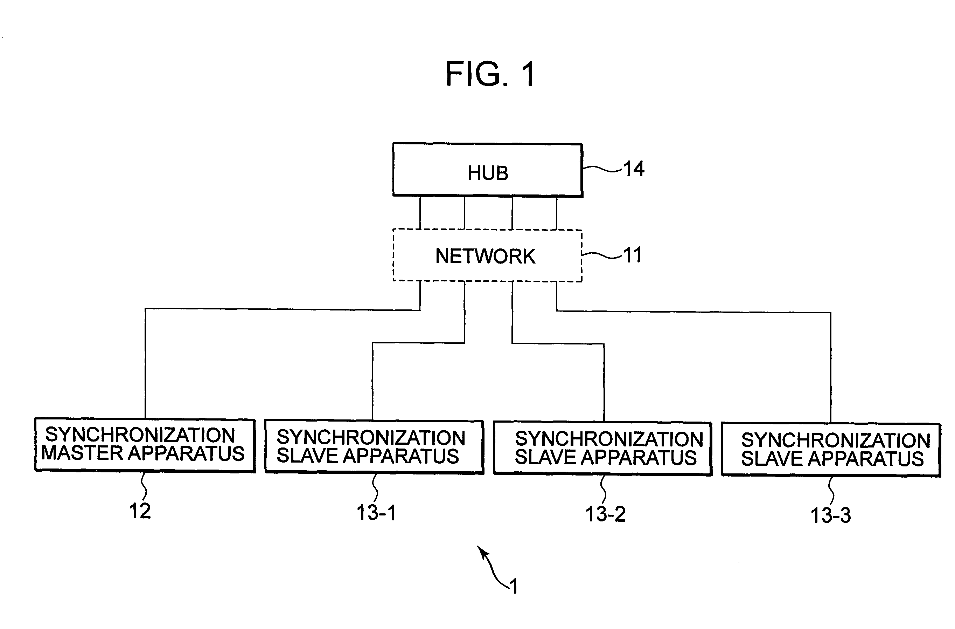

Fig. 1 shows a configuration example of an AV (Audio Visual) data communications system 1 to which the present invention is applied. To a network 11, representative of which is a LAN (Local Area Network), are interconnected a synchronization master apparatus 12, and synchronization slave apparatuses 13-1 to 13-3 (hereinafter, in cases where it is unnecessary to individually differentiate between these synchronization slave apparatuses, they will be referred to simply as synchronization slave apparatus(es) 13) via a hub 14.

The network 11 may be configured with, for example, 100 Base-T Ethernet (trademark). In this network 11, the CSMA/CD (Carrier Sense Multiple Access with Collision Detection) scheme is adopted, and transmission/reception of data between the synchronization master apparatus 12 and the synchronization slave apparatuses 13 is performed via the 100 Base-T switching hub 14.

Both the synchronization master apparatus 12 and the synchronization slave apparatuses 13 have a clock counter register that counts values in the same range, and a clock of the same precision, and increment (count) the value of the clock counter register in accordance with an internal clock.

The synchronization master apparatus 12 may be constituted by, for example, an AV (Audio Visual) data server, a personal computer or the like, and stores and manages real time data, such as video data and audio data, as MPEG data in the MPEG (Moving Picture Experts Group) 2 format. The synchronization master apparatus 12, based on its own clock counter register, adds time information to the stored MPEG data, and transmits it to the synchronization slave apparatuses 13 via the network 11 and the hub 14.

The synchronization slave apparatus 13 may be configured with, for example, an AV data (Audio Visual) player apparatus (television apparatus), an optical disc recording apparatus (optical disc recorder) or the like, and receives MPEG data from the synchronization master apparatus, constituted by an AV data server, via the network 11 and the hub 14, and carries out processes of playing the received MPEG data based on the time information added to the MPEG data and its own clock counter register, and of outputting it to a built-in display section, speaker and the like.

As described above, in the AV data communications system 1, real time data, such as video data and audio data, is transmitted/received, and the transmitted/received video data and audio data are played based on the respective clocks.

In the example of Fig. 1, only three synchronization slave apparatuses 13 are shown, however any number of synchronization slave apparatuses 13 may be connected to the network 11.

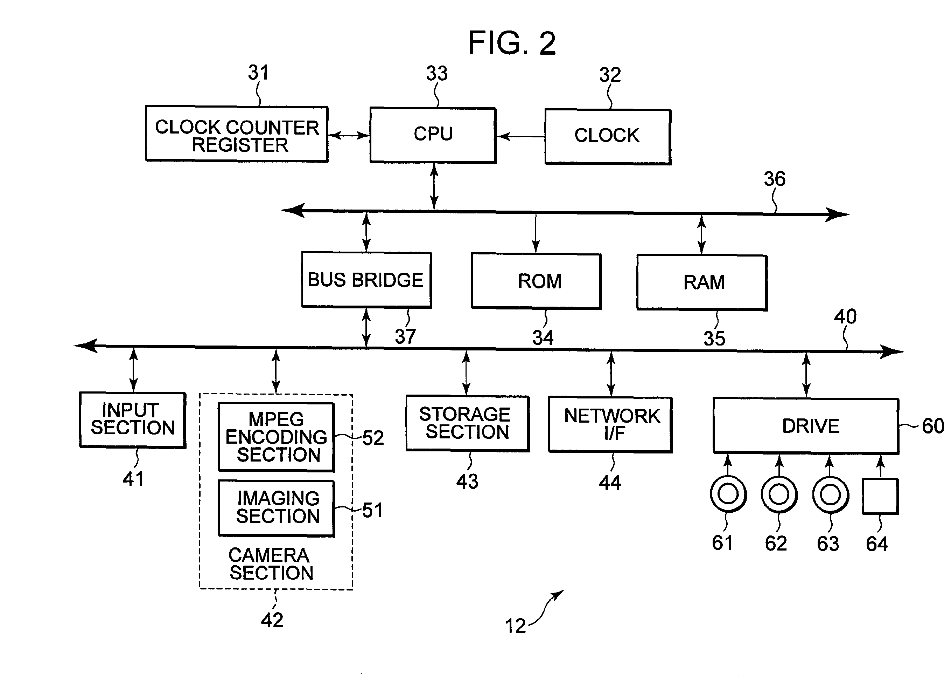

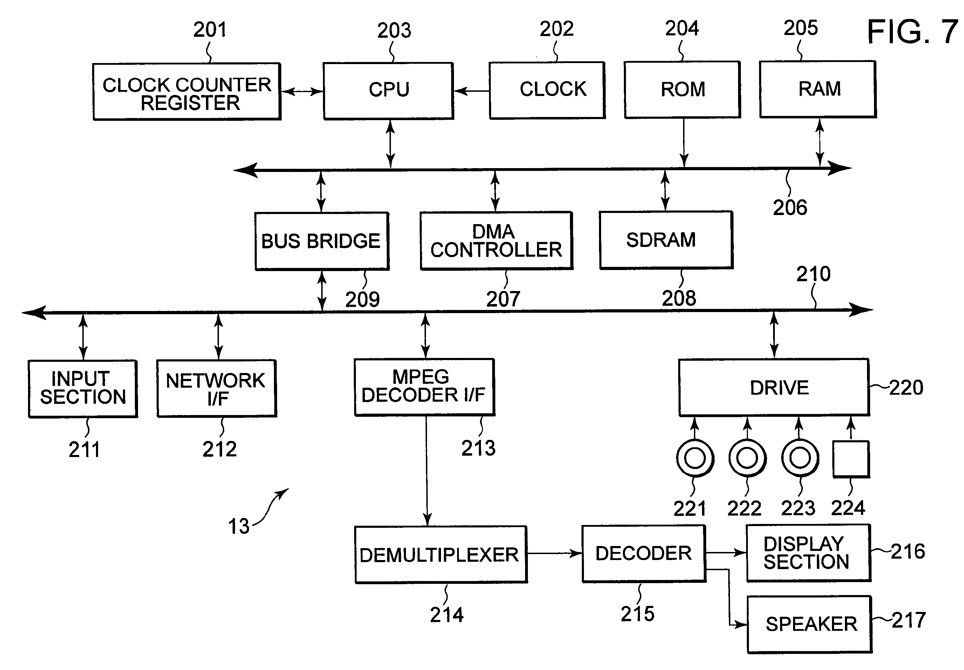

Fig. 2 shows a configuration example of the synchronization master apparatus 12. In Fig. 2, the synchronization master apparatus 12 includes a clock counter register 31 that counts values in the same range as a clock counter register 201 (in Fig. 7, later described) of the synchronization slave apparatus 13, and a clock 32 of the same precision (for example, 20 MHz ± 100 ppm) as a clock 202 (in Fig. 7, later described) of the synchronization slave apparatus 13. A CPU (Central Processing Unit) 33 increments (counts) the value of the clock counter register 31 in accordance with the clock 32. In the case of the example in Fig. 2, the clock counter register 31 counts, for example, values within the range of 0 to 19,999,999, and completes a cycle of these values in an interval of approximately one second.

The CPU 33, in accordance with the clock 32, executes various processes in accordance with a program stored in a ROM (Read Only Memory) 34 or a program loaded to a RAM (Random Access Memory) 35 from a storage section 43. In addition, data that is necessary for the CPU 33 to execute various processes is stored in the RAM 35 as deemed appropriate.

The CPU 33, the ROM 34 and the RAM 35 are interconnected via a CPU bus 36. In addition, a bus bridge 37 that bridges the CPU bus 36 and a system bus 40 is connected to this CPU bus 36.

To the system bus 40 are connected an input section 41 constituted by various buttons, switches and the like, a camera section 42 that images an object and inputs the imaged AV data as MPEG data, the storage section 43 constituted by a hard disk, or the like, that stores MPEG data, and a network interface (I/F) 44 that performs communications processing with the synchronization slave apparatuses 13 via the network 11. The camera section 42 is constituted by an imaging section 51 that images an object and inputs the imaged AV data, and an MPEG encoding section 52 that encodes the AV data inputted by the imaging section 51 in the MPEG 2 format.

In addition, as required, a drive 60 is connected to the system bus 40, and a magnetic disk 61, an optical disk 62, a magneto-optical disk 63, a semiconductor memory 64 or the like is loaded as deemed necessary, and computer programs read therefrom are installed in the storage section 43 or the ROM 34 as required.

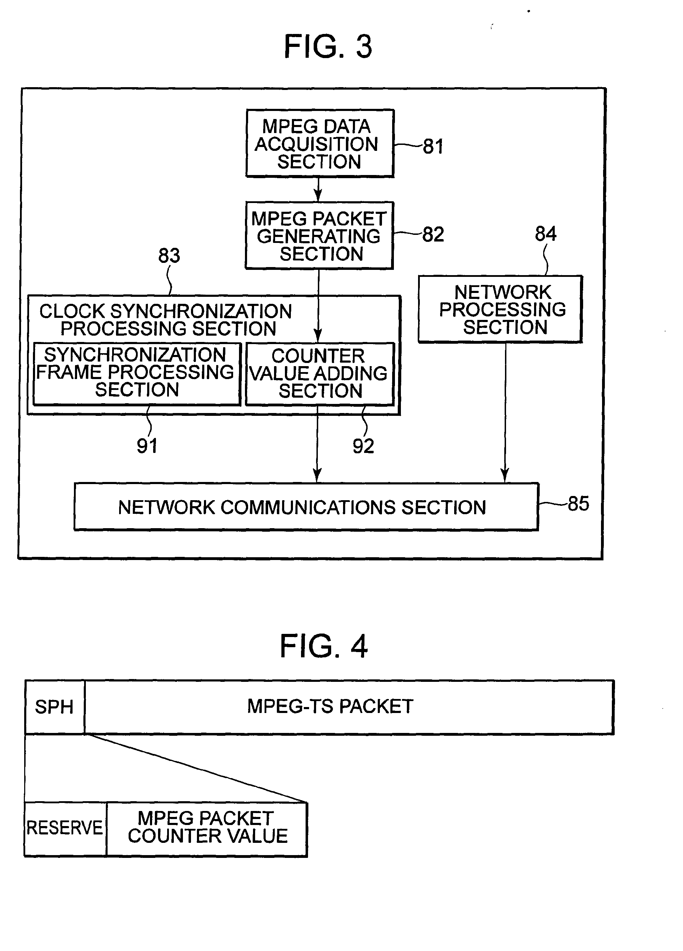

Fig. 3 is a block diagram showing a functional configuration example of the synchronization master apparatus 12. The functional blocks shown in Fig. 3 are realized by having predetermined control programs executed by the CPU 33 of the synchronization master apparatus 12. The example in Fig. 3 is constituted by, in addition to a network processing section 84 that performs conventional communications processing, functional blocks that perform MPEG data communications processing.

An MPEG data acquisition section 81 acquires MPEG-TS (transport stream) data from the MPEG encoding section 52 or the storage section 43, and outputs the acquired MPEG-TS data to an MPEG packet generating section 82. The MPEG packet generating section 82 generates a TS packet from the MPEG-TS data inputted by the MPEG data acquisition section 81, and outputs the generated TS packet to a clock synchronization processing section 83.

The clock synchronization processing section 83 is constituted by a synchronization frame processing section 91 and a counter value adding section 92. The synchronization frame processing section 91, based on the clock 32, generates, in a predetermined cycle (for example, one second), a synchronization control frame for instructing a reset of the value of the clock counter register 201 of the synchronization slave apparatus 13, and outputs the generated synchronization control frame to a network communications section 85.

When the TS packet is inputted from the MPEG packet generating section 82, the counter value adding section 92, based on the value of the clock counter register 31, adds, as shown in Fig. 4, an MPEG packet counter value, which indicates the time at which the destination apparatus (in the case of Fig. 1, the synchronization slave apparatus 13) decodes this packet, to the header of the TS packet inputted by the MPEG packet generating section 82, and outputs it to the network communications section 85 as a data frame.

Fig. 4 shows a configuration example of a TS packet to which the MPEG packet counter value has been added by the counter value adding section 92. In the case of the example in Fig. 4, the TS packet is constituted by a 4-byte source packet header (SPH) and a 188-byte MPEG-Transport Stream (TS) packet.

The packet header is constituted by a 7-bit reserved area (Reserve) and a 25-bit time stamp area, and in the example in Fig. 4, the MPEG packet counter value added by the counter value adding section 92 is stored in the time stamp area.

Returning to Fig. 3, the network processing section 84 controls communications processing of data other than MPEG data (for example, mail communications, communications using browser applications and the like), and outputs data frames to be transmitted to the network communications section 85.

The network communications section 85 broadcasts the synchronization control frame inputted by the synchronization frame processing section 91 to all of the synchronization slave apparatuses 13 connected to the network 11. In addition, the network communications section 85 transmits the data frame inputted by the counter value adding section 92 and the data frame inputted by the network processing section 84 to the destination synchronization slave apparatuses 13 via the network 11.

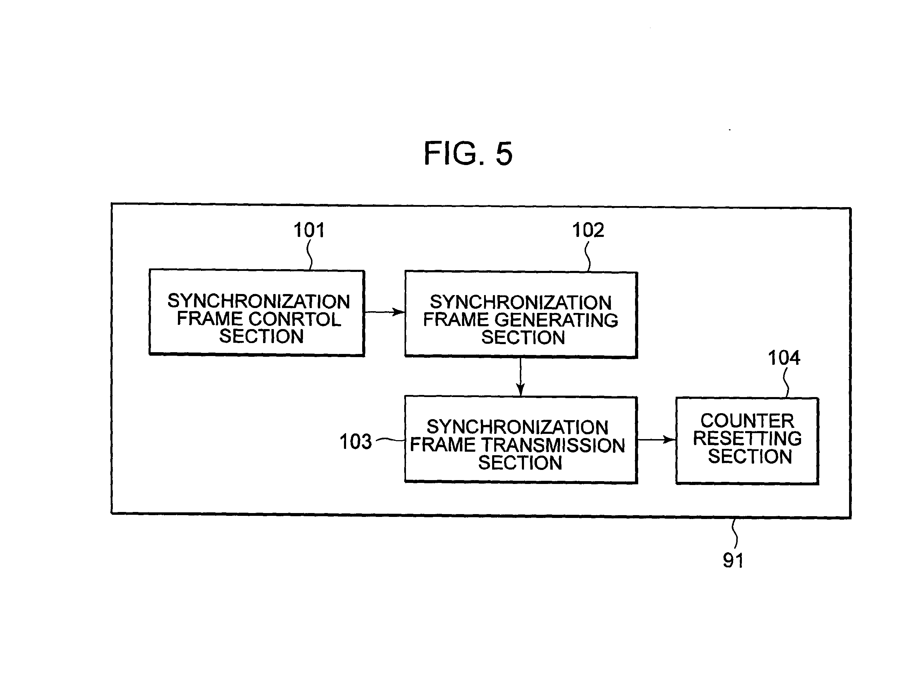

Fig. 5 shows a detailed block diagram of the synchronization frame processing section 91. In the example in Fig. 5, the synchronization frame processing section 91 is constituted by a synchronization frame control section 101, a synchronization frame generating section 102, a synchronization frame transmission section 103, and a counter resetting section 104.

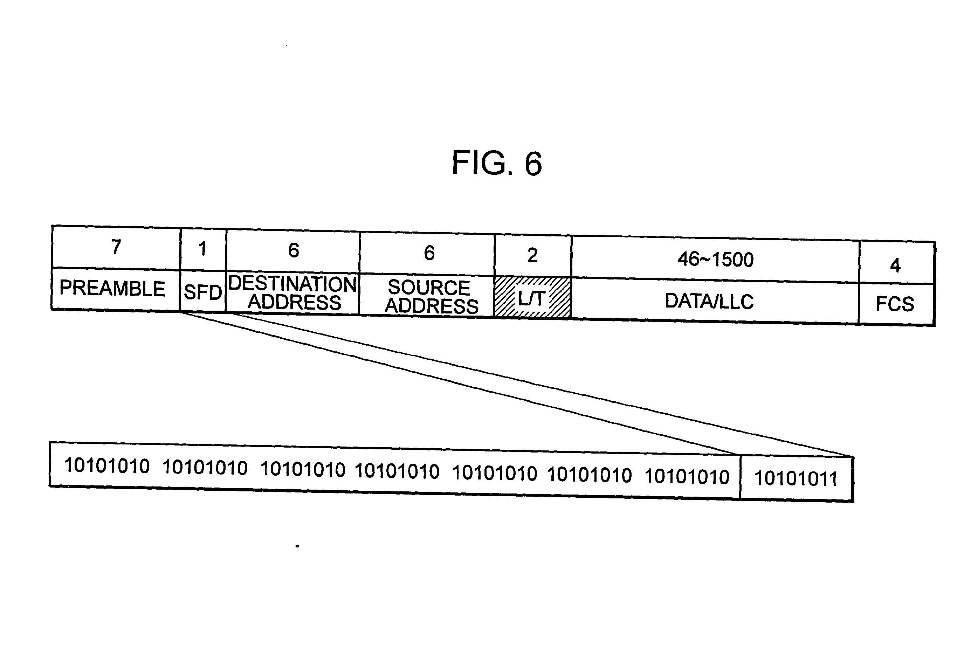

The synchronization frame control section 101 monitors the clock 32, controls, in a predetermined cycle, the synchronization frame generating section 102 and makes it generate a synchronization control frame. The synchronization frame generating section 102 generates the synchronization control frame by setting, in a data frame, a flag C, which indicates that it is a synchronization control frame, and outputs the generated synchronization control frame to the synchronization frame transmission section 103. This synchronization control frame will be described in detail with reference to Fig. 6.

Fig. 6 shows a data structure example of a data frame. The example in Fig. 6 is a data structure example of a case where an IEEE 802.3 network is used for the network 11.

An IEEE 802.3 data frame is constituted by, in order from the top, a 7-octet "preamble" field, a 1-octet "SFD (Start Frame Delimiter)" field, a 6-octet "destination address" field, a 6-octet "source address" field, a 2-octet "L (Length)/T (Type)" field, a 46 to 1500-octet "data/LLC (Logical Link Control)" field, and a 4-octet "FCS (Frame Check Sequence)" field.

In Ethernet (trademark), a data frame starts with a "preamble," which is a pattern of alternating ones and zeros. In the example in Fig. 6, the "preamble" is constituted by the 7-octets "10101010," "10101010," "10101010," "10101010," "10101010," "10101010" and "10101010." In addition, at a receiver apparatus that receives this data frame, when the "SFD" field constituted by the next octet "10101011" is detected while this "preamble" is being received, it is identified that the "preamble" field has ended, and the "destination address" field starts from the next bit.

A destination MAC address (Media Access Control address) is set in the "destination address" field following the "SFD" field, and a source MAC address is set in the "source address" field. The "L/T" field is defined such that if the value of the subsequent "data/LLC" field is 1500 octets or fewer, it represents the data size, and if the "L/T" field is 1536 or greater, it represents the type of upper layer protocol of the data. In addition, as for 1501 to 1535, they are undefined. Data of a minimum of 46 octets to a maximum of 1500 octets is stored in the "data/LLC" field. A CRC (Cyclic Redundancy Check) value for detecting frame errors is set in the "FCS" field.

Therefore, of the data frame configured in such a manner, the synchronization frame generating section 102 allocates one bit from the unused 1501 to 1535 in the "L/T" field that are not defined in IEEE 802.3 (for example, 1510) as the flag C that indicates the frame is a synchronization control frame, and based on the control of the synchronization frame control section 101, generates the synchronization control frame by setting 1510, which has been allocated as the flag C, in the "L/T" field.

Thus, if the flag C is in the received data frame, that is, if the "L/T" field is 1510, the synchronization slave apparatus 13 that has received the synchronization control frame is able to identify that the received data frame is a synchronization control frame.

Returning to Fig. 5, the synchronization frame transmission section 103 monitors the value of the clock counter register 31, and if it determine that the value of the clock counter register 31 has reached "0," it broadcasts, over the network 11 via the network communications section 85, the synchronization control frame inputted by the synchronization frame generating section 102. In addition, the synchronization frame transmission section 103 monitors the transmission of the synchronization control frame by the network communications section 85, and based on a transmit complete interrupt of the built-in network controller in the network interface 44, determines that transmission of the synchronization control frame is completed, controls the counter resetting section 104 so that the value of the clock counter register 31 is reset (to "0").

Based on the control of the synchronization frame transmission section 103, the counter resetting section 104 resets the value of the clock counter register 31 (to "0").

Fig. 7 shows a configuration example of the synchronization slave apparatus 13. In Fig. 7, the synchronization slave apparatus 13 is constituted by the clock counter register 201 that counts values in the same range as the clock counter register 31 of the synchronization master apparatus 12, and the clock 202 of the same precision as the clock 32 of the synchronization master apparatus 12. A CPU 203, in accordance with the clock 202, increments (counts) the value of the clock counter register 201.

The CPU 203, in accordance with the clock 202, executes various processes in accordance with a program stored in a ROM 204 or a program loaded in a RAM 205. In addition, data that is necessary for the CPU 203 to execute various processes is stored in the RAM 205 as deemed appropriate.

The CPU 203, the ROM 204 and the RAM 205 are interconnected via an internal bus 206. In addition, a DMA (Direct Memory Access) controller 207, an SDRAM (Synchronous Dynamic Random Access Memory) 208, and a bus bridge 209, which bridges the internal bus 206 and an input/output interface external bus 210, are also connected to this internal bus 206.

The DMA controller 207 acquires a TS packet from a data frame received at a network interface (I/F) 212, and accumulates the acquired TS packet in the SDRAM 208. TS packets are accumulated in the SDRAM 208 by the DMA controller 207.

To the input/output interface external bus 210 are connected an input section 211 constituted by various buttons, switches and the like, the network interface 212 that performs communications processing with the synchronization master apparatus 12 via the network 11, and an MPEG decoder interface (I/F) 213.

Data frames transmitted from the synchronization master apparatus 12 are accumulated at the network interface 212. Under the control of the CPU 203, the TS packets accumulated in the SDRAM 208 are inputted to the MPEG decoder interface 213 as MPEG-TS data. The MPEG decoder interface 213 outputs the inputted MPEG-TS data to a demultiplexer 214. The demultiplexer 214 separates the MPET-TS data inputted by the MPEG decoder interface 213 into video data, audio data and the like, and outputs the separated video data and audio data to a decoder 215.

The decoder 215 decodes the video data inputted from the demultiplexer 214 and displays video on a display section 216, while it decodes the audio data inputted from the demultiplexer 214 and outputs audio from a speaker 217.

In addition, a drive 220 is connected to the input/output interface external bus 210 as required, and a magnetic disk 221, an optical disk 222, a magneto-optical disk 223, a semiconductor memory 224 or the like is loaded as deemed appropriate, and a computer program read therefrom is installed in the ROM 204 as required.

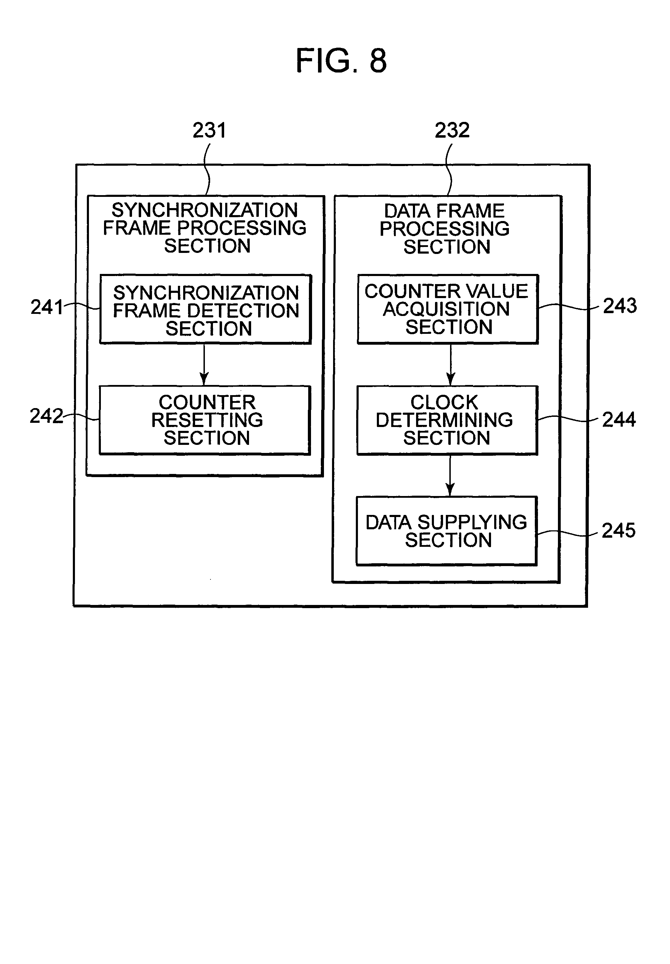

Fig. 8 is a block diagram showing a functional configuration example of the synchronization slave apparatus 13. The functional blocks shown in Fig. 8 are realized by having predetermined control programs executed by the CPU 203 of the synchronization slave apparatus 13.

A synchronization frame processing section 231 is constituted by a synchronization frame detection section 241 and a counter resetting section 242. When the synchronization frame detection section 241 determines, based on a receive complete interrupt of a built-in network controller in the network interface 212, that reception of a data frame is completed, it detects the flag C from the data frame received at the network interface 212, determines whether or not the flag C is detected from the received data frame (that is, whether or not the "L/T" field is 1510), recognizes that the received data frame is a synchronization control frame if the flag C is detected from the received data frame, and controls the counter resetting section 242 to make it reset the value of the clock counter register 201 (to "0"). The counter resetting section 242 resets the value of the clock counter register 201 based on the control of the synchronization frame detection section 241.

A data frame processing section 232 is constituted by a counter value acquisition section 243, a clock determining section 244, and a data supplying section 245. The counter value acquisition section 243 acquires an MPEG packet counter value from the header of the TS packet accumulated in the SDRAM 208, and outputs the acquired MPEG packet counter value to the clock determining section 244.

The clock determining section 244 monitors the value of the clock counter register 201, determines whether or not the value of the clock counter register 201 has reached the MPEG packet counter value, and if it is determined that the value of the clock counter register 201 has reached the MPEG packet counter value, controls the data supplying section 245 to make it output the MPEG-TS data of the corresponding TS packet to the MPEG decoder interface 213. Based on the control of the clock determining section 244, the data supplying section 245 reads the corresponding TS packet from the SDRAM 208, and outputs the MPEG-TS data of the read TS packet to the MPEG decoder interface 213.

Next, clock synchronization in the network 11 of the AV data communications system 1 will be described.

The CSMA/CD scheme is used in the network 11 of the AV data communications system 1, and since even if the clocks 32 and 202 of the same precision are used in the synchronization master apparatus 12 and the synchronization slave apparatuses 13, clock errors (± 100 ppm) occur, and therefore, in principle, it cannot be guaranteed that the timing at which data frames are transmitted will start precisely in a timing of uniform intervals or in a given timing. Accordingly, in the AV data communications system 1, a synchronization control frame transmission process is executed by the synchronization master apparatus 12.

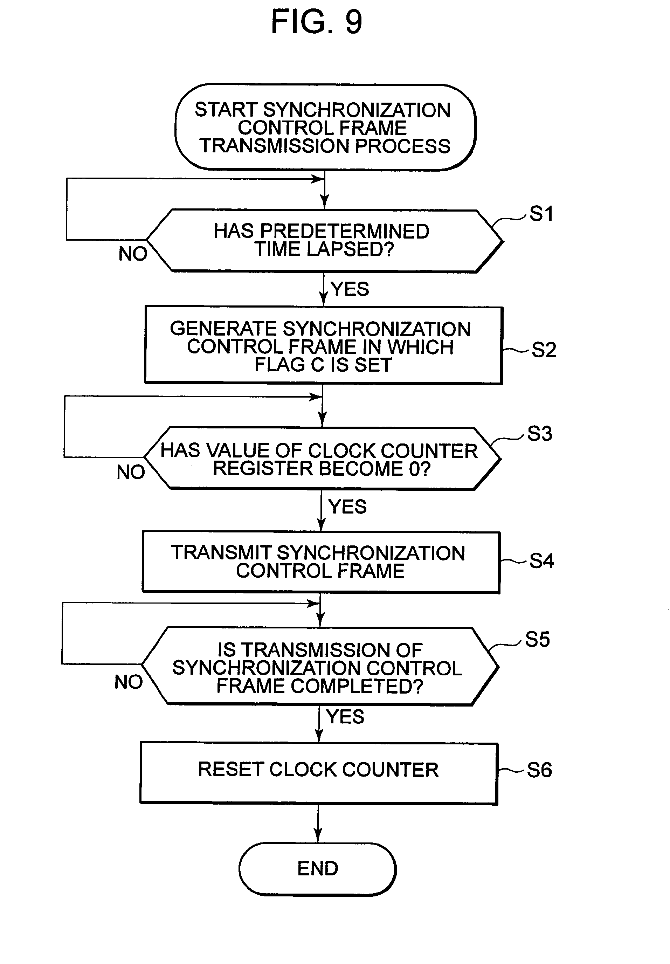

This synchronization control frame transmission process will be described with reference to the flow chart in Fig. 9.

In step S1 in Fig. 9, the synchronization frame control section 101 monitors the clock 32, and waits until a predetermined time (for example, one second) has lapsed. If the synchronization frame control section 101 determines that the predetermined time has lapsed, it proceeds to step S2, controls the synchronization frame generating section 102 to make it generate a synchronization control frame and proceeds to step S3. Specifically, based on the control of the synchronization frame control section 101, the synchronization control frame is generated by setting 1510, which is allocated as the flag C and described with reference to Fig. 6, in the "L/T" field, and the generated synchronization control frame is outputted to the synchronization frame transmission section 103.

In step S3, the synchronization frame transmission section 103 monitors the value of the clock counter register 31, and waits until the value of the clock counter register 31 becomes "0." If the synchronization frame transmission section 103 determines that the value of the clock counter register 31 has become "0," it proceeds to step S4, controls the network communications section 85 to make it broadcast the synchronization control frame inputted by the synchronization frame generating section 102 over the network 11, and proceeds to step S5.

In step S5, the synchronization frame transmission section 103 monitors the transmission of the synchronization control frame by the network communications section 85, and waits until transmission of the synchronization control frame is completed. If, based on a transmit complete interrupt of the built-in network controller in the network interface 44, the synchronization frame transmission section 103 determines that transmission of the synchronization control frame is completed, it proceeds to step S6, controls the counter resetting section 104 to make it reset the value of the clock counter register 31 (to "0"), and completes the synchronization control frame transmission process.

As described above, in the AV data communications system 1, a synchronization control frame is broadcasted by the synchronization control master apparatus 12 in a predetermined cycle, and the clock counter register 31 is reset after transmission of the synchronization control frame is completed.

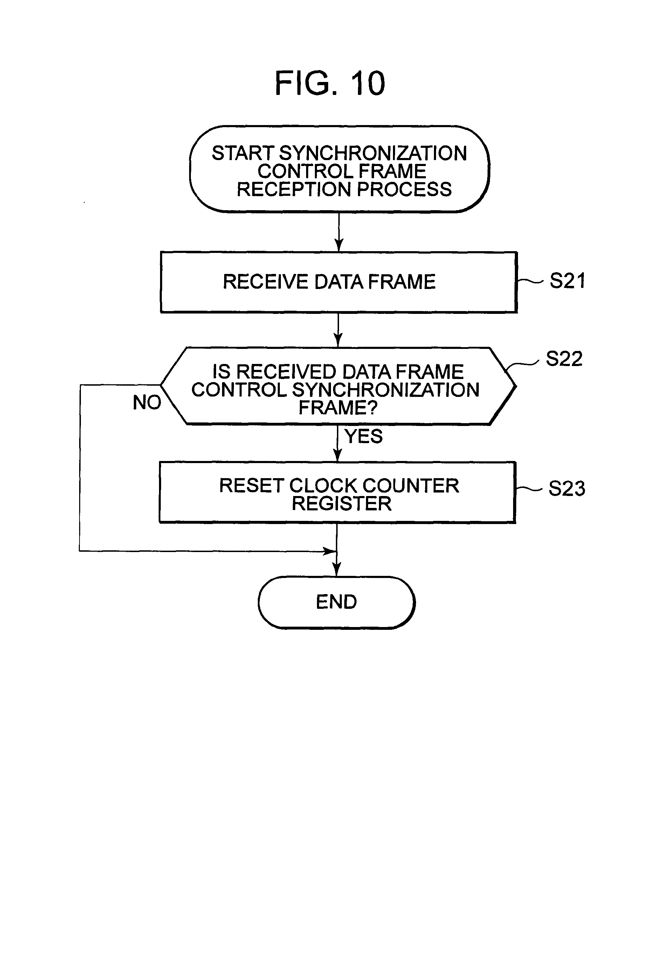

On the other hand, the synchronization slave apparatus 13 receives the synchronization control frame transmitted from the synchronization control master apparatus 12. This synchronization control frame reception process by the synchronization slave apparatus 13 will be described with reference to the flow chart in Fig. 10.

In step S21, the network interface 212 receives a data frame transmitted from the synchronization master apparatus 12, and proceeds to step S22 once, based on a receive complete interrupt of the built-in network controller in the network interface 212, reception of the data frame is completed, and the synchronization frame detection section 241 detects the flag C (octet 1510 of the "L/T" field in Fig. 5) from the data frame received at the network interface 212, determines whether or not the flag C is detected from the data frame, and if it determines that the flag C is not detected from the data frame, that is if it determines that the received data frame is not a synchronization control frame, terminates the synchronization frame reception process.

In step S22, if the synchronization frame detection section 241 determines that the flag C is detected from the data frame, that is if it determines that the received data frame is a synchronization control frame, it proceeds to step S23, controls the counter resetting section 242 to make it reset the value of the clock counter register 201 (to "0"), and terminates the synchronization frame reception process.

As described above, in the AV data communications system 1, the synchronization control frame transmitted from the synchronization master apparatus 12 is received by the synchronization slave apparatus 13, and the clock counter register 201 is reset after reception.

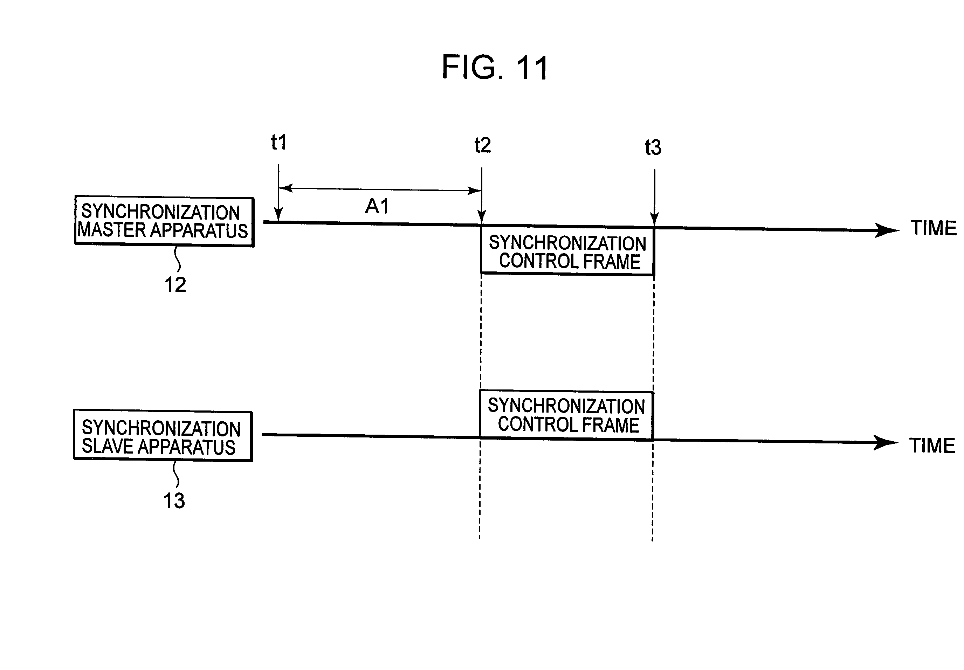

In other words, when the synchronization control frame is broadcasted by the synchronization master apparatus 12, and the clock counter register 31 is reset after transmission of the synchronization control frame is completed, the synchronization slave apparatus 13 receives the synchronization control frame transmitted by the synchronization master apparatus 12, and also resets the clock counter register 201 based on the received synchronization control frame. The timing for resetting the clock counter register 31 and the clock counter register 201 by way of this synchronization control frame is described with reference to the timing chart in Fig. 11.

Fig. 11 shows the timing at which the synchronization control frame is transmitted/received by the synchronization master apparatus 12 and the synchronization slave apparatus 13. In the example in Fig. 11, the horizontal axis represents time.

The synchronization master apparatus 12 generates a synchronization control frame at timing t1 when it is determined that a predetermined time has lapsed, and waits for duration A1 from timing t1 till timing t2 when the value of the clock counter register 31 becomes "0." Then, at timing t2 when the value of the clock counter register 31 has become "0," the synchronization master apparatus 12 starts transmission of the synchronization control frame, and resets the clock counter register 31 at timing t3 when transmission of the synchronization control frame is completed, which is determined based on a transmit complete interrupt of the built-in network controller in the network interface 44.

Here, in the network 11 in Fig. 1, the CSMA/CD scheme is used, and in the CSMA/CD scheme, the timing at which the transmission and reception of data between a transmitter apparatus and a receiver apparatus are completed (in other words, the timing of the transmit complete interrupt of the built-in network controller in the network interface 44 and of the receive complete interrupt of the built-in network controller in the network interface 212) is assumed to be approximately simultaneous. It is to be noted that since the accuracy of this timing is, for example, in the case of a 100 base-T network, approximately 100 MHz ± 1 clock, it is extremely smaller than the synchronized clock (20 MHz ± ppm) error, and makes little difference even if they were described as being simultaneous. Therefore, hereinafter, a description will be given taking the timing at which the transmission and reception of data between the transmitter apparatus and the receiver apparatus are completed to be simultaneous.

Therefore, the synchronization slave apparatus 13 starts reception of the synchronization control frame at the same timing as t2 at which the synchronization master apparatus 12 started transmission of the synchronization control frame, determines, based on the receive complete interrupt of the built-in network controller in the network interface 212 and at the same timing as t3 at which the synchronization master apparatus 12 completes transmission of the synchronization control frame, that reception of the synchronization control frame is completed, and resets the clock counter register 201.

Thus, in the CSMA/CD scheme, since the timing at which transmission and reception of the synchronization control frame are completed (that is, the timing of the transmit complete interrupt of the built-in network controller in network interface 44, and of the receive complete interrupt of the built-in network controller in the network interface 212) is simultaneous, the timing at which the synchronization master apparatus 12 resets the clock counter register 31 and the timing at which the synchronization master apparatus 13 resets the clock counter register 201 are the same.

Therefore, the synchronization master apparatus 12 that transmitted the synchronization control frame and the plurality of synchronization slave apparatuses 13 that received the synchronization control frame are able to reset their respective clock counter registers all at once. Thus, the AV data communications system 1 as a whole can be placed in a state where clock synchronization is maintained with a precision of approximately 20 MHz ± 1 clock.

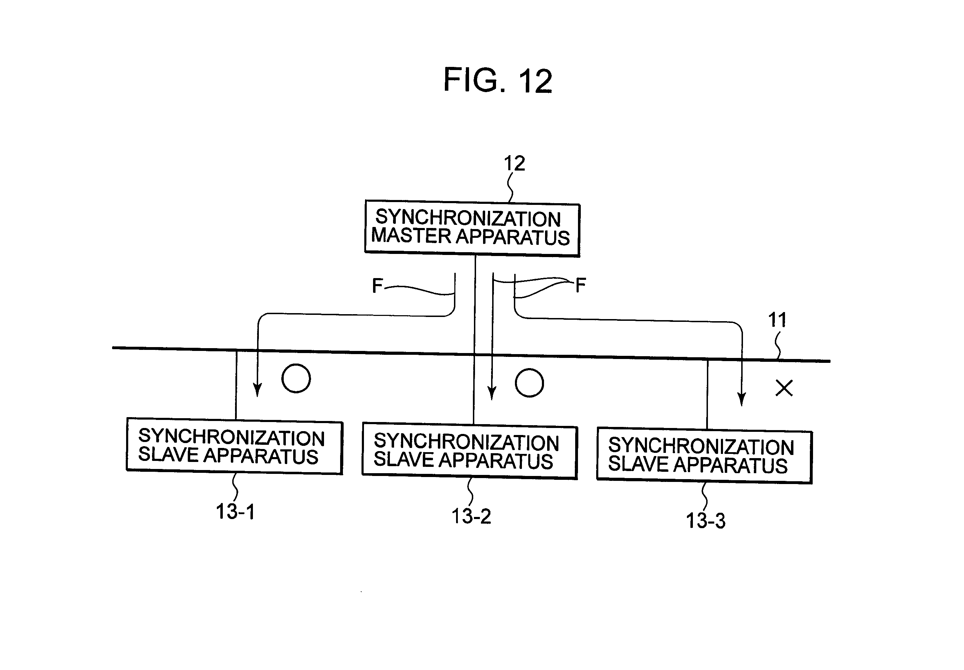

It is to be noted that even if, as shown in Fig. 12, the synchronization master apparatus 12 broadcasted a control frame, cases where, among the synchronization slave apparatuses 13 connected to the network 11, reception of the synchronization control frame will be failed are conceivable.

In Fig. 12, a configuration example in which the AV data communications system 1 in Fig. 1 is simplified is shown. In the example in Fig. 12, a synchronization control frame F is broadcasted from the synchronization master apparatus 12 to the synchronization slave apparatuses 13-1 to 13-3 connected to the network 11.

In the case of the example in Fig. 12, since the synchronization slave apparatuses 13-1 and 13-2 receive the synchronization control frame F via the network 11, clock synchronization is achieved between the synchronization master apparatus 12 and the synchronization slave apparatuses 13-1 and 13-2, however the synchronization slave apparatus 13-3 fails to receive the synchronization control frame, and clock synchronization is not achieved. As a result, due to this reception error, there is a risk that clock synchronization may fall apart in the AV data communications system 1 as a whole.

In order to address this, in the AV data communications system 1, as was described above with reference to Fig. 11, the synchronization master apparatus 12 transmits the synchronization control frame at timing t2 at which the value of the clock counter register 31 becomes "0."

For example, if the synchronization master apparatus 12 transmits the synchronization control frame when the value of the clock counter register 31 is "500," and resets each of the clock counter registers (to "0"), there will be a significant difference with the value of the clock counter register of the synchronization slave apparatus 13-3 that failed to receive the synchronization control frame. Therefore, by transmitting the synchronization control frame at timing t2 when the value of the clock counter register 31 becomes "0," even if, hypothetically, the synchronization slave apparatus 13-3 were to fail to receive the synchronization control frame, by the time the values of the clock counter registers of the synchronization master apparatus 12 and the synchronization slave apparatuses 13-1 and 13-2, which succeed in clock synchronization, complete a cycle and become "0" again, the clock counter register 201 of the synchronization slave apparatus 13-3, since it also counts values in the same range, would be completing a cycle at around the same time and become "0" albeit with some degree of difference.

Therefore, by transmitting the synchronization control frame at timing t2 when the value of the clock counter register 31 becomes "0," even if reception of the synchronization control frame is failed, occurrences of a large difference in the synchronization of the clock counter registers are suppressed, and the difference in the synchronization of the clock counter registers may be kept to a minimum.

As described above, in the AV data communications system 1, by transmitting the synchronization control frame in a predetermined cycle, the synchronization master apparatus 12 and the plurality of synchronization slave apparatuses 13 that received the synchronization control frame are able to reset their respective clock counter registers at once, and the AV data communications system 1 as a whole can constantly be kept in a state where clock synchronization is maintained.

As a result, in the AV data communications system 1, even if an arbitrary apparatus connected to the network 11 starts transmission of real time data, such as video data and audio data, at an arbitrary time, any apparatus, so long as it is an apparatus connected to the network 11, is able to, without negotiating synchronization, performs a playing process immediately after transmission of the data is started.

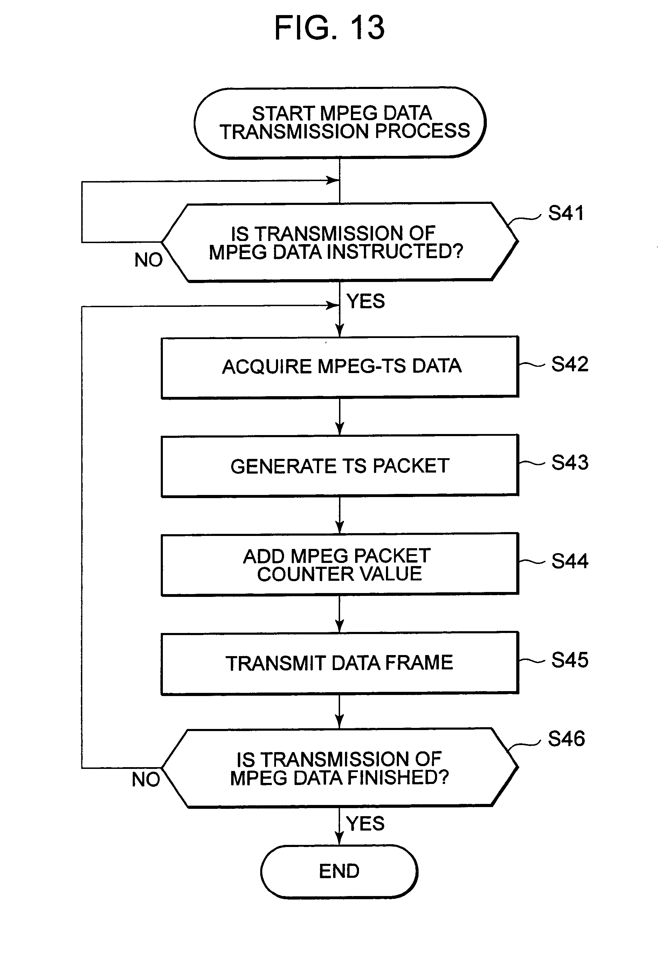

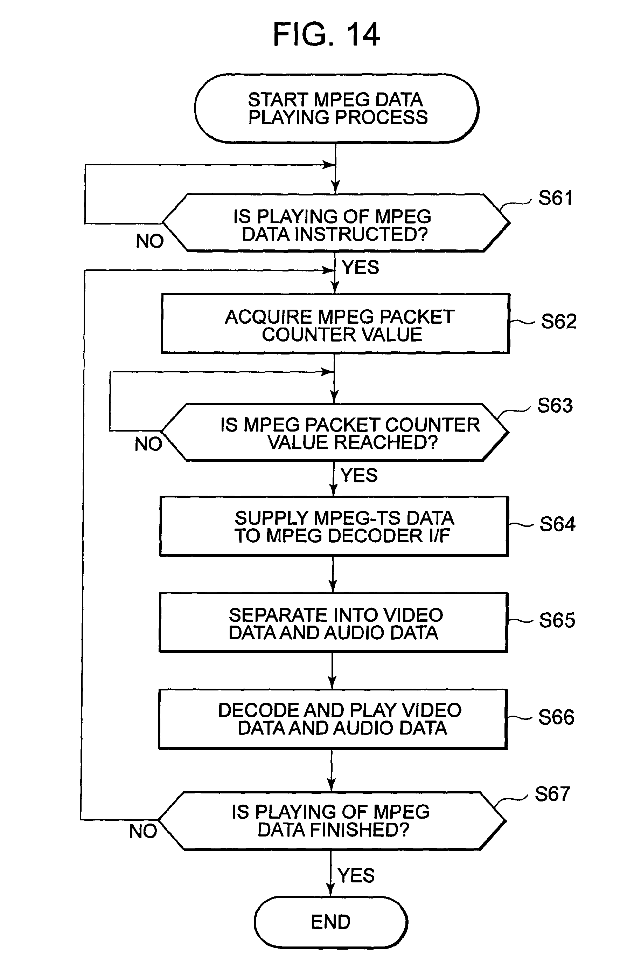

Next, processes of transmitting and playing MPEG data in the AV data communications system 1, in which clock synchronization is maintained constantly as described above, will be described with reference to Fig. 13 and Fig. 14. An MPEG data transmission process by the synchronization master apparatus 12 will be described with reference to the flow chart in Fig. 13, and an MPEG data playing process by the synchronization slave apparatus 13 will be described with reference to the flow chart in Fig. 14.

The user operates the input section 211 of the synchronization slave apparatus 13 and inputs, to the synchronization slave apparatus 13, an instruction to play, at the synchronization slave apparatus 13, MPEG data stored in the storage section 43 of the synchronization master apparatus 12. The input section 211 of the synchronization slave apparatus 13 outputs the instruction from the user to the CPU 203 and the DMA controller 207, while transmitting an MPEG data transmission instruction to the synchronization master apparatus 12 via the network 11 by controlling the network interface 212. It is to be noted that this instruction by the user may also be inputted via the input section 41 of the synchronization master apparatus 12.

In step S41, the MPEG data acquisition section 81 of the synchronization master apparatus 12 waits until transmission of MPEG data is instructed, and, once an instruction from the synchronization slave apparatus 13 to transmit MPEG data is inputted via the network interface 44, determines that transmission of MPEG data has been instructed, proceeds to step S42, acquires MPEG-TS data from the storage section 43, outputs the acquired MPEG-TS data to the MPEG packet generating section 82 and proceeds to step S43.

In step S43, the MPEG packet generating section 82 generates a TS packet from the MPEG-TS data inputted by the MPEG data acquisition section 81, outputs the generated TS packet to the clock synchronization processing section 83, and proceeds to step S44. Based on the value of the clock counter register 31, the counter value adding section 92 adds an MPEG packet counter value, which indicates the time at which the destination apparatuses (in the case of Fig. 1, the synchronization slave apparatuses 13) decode this TS packet, to the header of the TS packet inputted by the MPEG packet generating section 82, outputs, to the network communications section 85, as a data frame the TS packet to which the MPEG packet counter value has been added, and proceeds to step S45.

In step S45, the network communications section 85 transmits the data frame inputted by the counter value adding section 92 to the destination synchronization slave apparatuses 13 via the network 11, and proceeds to step S46. In step S46, the MPEG data acquisition section 81 determines whether or not the instructed transmission of MPEG data has been finished, and if it determines that the transmission of MPEG data is finished, terminates the MPEG data transmission process. In addition, if, in step S46, the MPEG data acquisition section 81 determines that the transmission of MPEG data is not finished, it returns to step S42 and the subsequent steps are repeated.

In correspondence therewith, the network interface 212 of the synchronization slave apparatus 13 receives via the network 11 the data frame from the synchronization master apparatus 12. The DMA controller 207 acquires the TS packet from the data frame received at the network interface 212, and accumulates the acquired TS packet in the SDRAM 208.

On the other hand, in step S61 in Fig. 14, the counter value acquisition section 243 of the synchronization slave apparatus 13 waits until playing of the MPEG data is instructed, and once an instruction to play the MPEG data is inputted by the user via the input section 211, determines that the playing of the MPEG data has been instructed, proceeds to step S62, acquires the MPEG packet counter value from the header of the TS packet accumulated in the SDRAM 208, outputs the acquired MPEG packet counter value to the clock determining section 244 and proceeds to step S63.

In step S63, the clock determining section 244 monitors the value of the clock counter register 201, waits until the value of the clock counter register 201 reaches the MPEG packet counter value, and if it determines that the value of the clock counter register 201 has reached the MPEG packet counter value, proceeds to step S64, and controls the data supplying section 245 to make it output the MPEG-TS data of the corresponding TS packet to the MPEG decoder interface 213. The MPEG decoder interface 213 outputs the inputted MPEG-TS data to the demultiplexer 214 and proceeds to step S65.

In step S65, the demultiplexer 214 separates the MPEG-TS data inputted by the MPEG decoder interface 213 into video data, audio data and the like, outputs the separated video data and audio data to the decoder 215 and proceeds to step S66. The decoder 215 decodes the video data inputted from the demultiplexer 214 and displays video on the display section 216, while decoding the audio data inputted from the demultiplexer 214 and outputting audio from the speaker 217, and proceeds to step S67.

In step S67, the counter value acquisition section 243 determines whether or not the instructed playing of the MPEG data has finished, and if it determines that the playing of the MPEG data has finished, terminates the MPEG data playing process. In addition, if, in step S67, the counter value acquisition section 243 determines that the playing of the MPEG data is not finished, it returns to step S62 and the subsequent steps are repeated.

As described above, since MPEG data is transmitted and played based on the synchronized clocks in the AV data communications system 1, highly precise playing can be carried out.

In addition, in the AV data communications system 1, clock synchronization can be achieved by simply resetting the clock counter registers at the same timing through the synchronization control frame. Therefore, in order to implement such a system, dedicated hardware such as an LSI is unnecessary, and, for example, as described above, in the synchronization master apparatus 12, only a functional block that transmits MPEG data need be added to the network processing section 84 in Fig. 3. In other words, implementation is very simple because existing network interfaces (MAC link layer and physical layer) such as 802.3x and 802.11x can be used as-is.

It is to be noted that the network was described above as an EtherNet (trademark) LAN using the CSMA/CD scheme, however, the CSMA/CA scheme may also be used, and so long as the timing at which data is transmitted and received is simultaneous as described above, other networks, such as the Internet, may also be used.

In addition, in the description above, the synchronization master apparatus was described as being an AV data server, a personal computer or the like, and the synchronization slave apparatus was described as being an AV data player apparatus, an optical disc recording apparatus or the like. However, so long as one synchronization master apparatus that transmits a synchronization control frame is connected to the network, the synchronization master apparatus and the synchronization slave apparatus may be any kind of apparatus.

Therefore, although in the description above, MPEG data was transmitted from the synchronization master apparatus, in the AV data communications system 1, since clock synchronization is achieved among the apparatuses in the AV data communications system 1 as a whole by the synchronization master apparatus, MPEG data may be transmitted from the synchronization slave apparatus to the synchronization master apparatus, or MPEG data may also be transmitted from one synchronization slave apparatus to another synchronization slave apparatus.

In addition, although in the description above, a description was given with respect to an AV data communications system that performs high precision content playing in the transmission of a real time video stream using Ethernet, application to counter synchronization between decentralized control devices in an FA (Factory Automation) system for which high precision real-time qualities are required is also possible. In addition, application to a network system that carries out timing control between devices using GPS (Global Position System) is also possible.

The series of procedures described above may be executed through hardware, but they may also be executed through software. If the procedures are to be executed through software, programs constituting the software are installed, from a program storage medium, to computers built into dedicated hardware, or to, for example, general-purpose personal computers, which are capable of executing various functions by having various programs installed.

The program storage medium that stores programs to be installed to a computer and made executable by a computer is constituted by, as shown in Fig. 2 and Fig. 7, packaged media including magnetic disks 61 and 221 (including flexible disks), optical disks 62 and 222 (including CD-ROMs(Compact Disc-Read Only Memory) and DVDs (Digital Versatile Disc)), magneto-optical disks 63 and 223 (including MDs (Mini-Disc)(trademark)), semiconductor memories 64 and 224 and the like, or of the ROMs 34 and 204 and the storage section 43 in which the programs are stored temporarily or permanently.

It is to be noted that, in the present description, the steps shown in the flow chart are to include procedures performed in time series order described, as well as procedures executed in parallel or individually and not necessarily processed in time series order.

It is to be noted that, in the present description, a system refers to a whole apparatus constituted by a plurality of apparatuses.

### INDUSTRIAL APPLICALBILITY

According to the present invention, highly precise clock synchronization can be carried out with ease. Further, according to the present invention, highly precise clock synchronization can be performed without much cost.

## Claims

1. A communications system in which data is communicated between a first information processing apparatus and a second information processing apparatus which are interconnected by a network, **characterized by** comprising:
said first information processing apparatus including
a transmission clock counter that counts an internal transmission clock,
generation means that generates, in a predetermined cycle,
synchronization control data that instructs a reset of the value of a reception clock counter that counts an internal reception clock of a second information processing apparatus,
transmission means that transmits said synchronization control data generated by said generation means to said second information processing apparatus, and
transmission resetting means that resets the value of said transmission clock counter after transmission of said synchronization control data by said transmission means is completed; and
said second information processing apparatus including
said reception clock counter,
data determining means that determines whether or not data that is received is said synchronization control data, and
reception resetting means that resets the value of said reception clock counter if said data is determined as said synchronization control data by said data determining means.

2. The communications system according to claim 1, **characterized in that**:
said transmission clock counter and said reception clock counter count values in the same range.

3. The communications system according to claim 1, **characterized in that**:
said first information processing apparatus further comprises counter determining means that determines whether or not the value of said transmission clock counter becomes zero; wherein
if the value of said transmission clock counter is determined as to become zero by said counter determining means, said transmission means transmits said synchronization control data generated by said generation means to said second information processing apparatus.

4. A communications method in which data is communicated between a first information processing apparatus and a second information processing apparatus, which are interconnected by a network, **characterized in that**:
a communications method of said first information processing apparatus generates synchronization control data that instructs a reset of the value of a reception clock counter that counts an internal reception clock of said second information processing apparatus, transmits said generated synchronization control data to said second information processing apparatus, and resets the value of a transmission clock counter that counts an internal transmission clock after transmission of said synchronization control data is completed; and
a communications method of said second information processing apparatus determines whether or not data that is received is said synchronization control data, and resets the value of said reception clock counter if said data is determined as said synchronization control data.

5. An information processing apparatus for transmitting/receiving data with another information processing apparatus connected thereto by a network, **characterized by** comprising:
a clock counter that counts an internal clock;
generation means that generates, in a predetermined cycle, synchronization control data that instructs a reset of the value of a clock counter of said another information processing apparatus;
control data transmission means that transmits said synchronization control data generated by said generation means to said another information processing apparatus; and
reset means that resets the value of said clock counter after transmission of said synchronization control data by said control data transmission means is completed.

6. The information processing apparatus according to claim 5, **characterized in that**:
said clock counter counts values in the same range as said clock counter of said another information processing apparatus.

7. The information processing apparatus according to claim 5, **characterized by** further comprising:
counter determining means that determines whether or not the value of said clock counter becomes zero; wherein
if the value of said clock counter is determined as to become zero by said counter determining means, said control data transmission means transmits said synchronization control data generated by said generation means to said another information processing apparatus.

8. The information processing apparatus according to claim 5, **characterized by** further comprising:
adding means that adds to the header of said data, based on the value of said clock counter, a counter value indicating the timing at which said another information processing apparatus processes data; and
data transmission means that transmits to said another information processing apparatus said data to which said counter value added by said adding means.

9. The information processing apparatus according to claim 5, **characterized by** further comprising:
acquisition means that acquires a counter value, which indicates the timing at which data is processed, added by said another information processing apparatus;
time determining means that determines whether or not the value of said clock counter reaches said counter value acquired by said acquisition means; and
data processing means that processes said data if said data is determined by said time determining means that the value of said clock counter reaches said counter value.

10. An information processing method for transmitting/receiving data with an information processing apparatus connected thereto by a network, **characterized by** comprising:
a generation step that generates, in a predetermined cycle, synchronization control data that instructs a reset of the value of a clock counter of said information processing apparatus;
a control data transmission step that transmits said synchronization control data generated by the process of said generation step to said information processing apparatus; and
a reset step that resets the value of a clock counter that counts an internal clock after transmission of said synchronization control data by the process of said control data transmission step is completed.

11. A program for causing a computer to execute a process for transmitting/receiving data with an information processing apparatus connected by a network, **characterized by** comprising:
a generation step that generates, in a predetermined cycle, synchronization control data that instructs a reset of the value of a clock counter of said information processing apparatus;
a control data transmission step that transmits said synchronization control data generated by the process of said generation step to said information processing apparatus; and
a reset step that resets the value of a clock counter that counts an internal clock after transmission of said synchronization control data by the process of said control data transmission step is completed.

12. An information processing apparatus for transmitting/receiving data with another information processing apparatus connected thereto by a network, **characterized by** comprising:
a clock counter that counts an internal clock;
data determining means that determines whether or not data that is received is synchronization control data, which instructs a reset of the value of said clock counter at the same time as a reset of the value of a clock counter of said another information processing apparatus; and
reset means that resets the value of said clock counter if said data is determined as said synchronization control data by said data determining means.

13. The information processing apparatus according to claim 12, **characterized in that**:
said clock counter counts values in the same range as said clock counter of said other information processing apparatus.

14. The information processing apparatus according to claim 12, **characterized by** further comprising:
adding means that adds to the header of said data, based on the value of said clock counter, a counter value indicating the timing at which said another information processing apparatus processes data; and
data transmission means that transmits to said another information processing apparatus said data to which said counter value is added by said adding means.

15. The information processing apparatus according to claim 12, **characterized by** further comprising:
acquisition means that acquires a counter value, which indicates the timing at which data is processed, added by said another information processing apparatus;
time determining means that determines whether or not the value of said clock counter reaches said counter value acquired by said acquisition means; and
data processing means that processes said data if said data is determined by said time determining means that the value of said clock counter reaches said counter value.

16. An information processing method, **characterized by** comprising:
a data determining step that determines if data that is received is synchronization control data, which instructs, at the same time as a reset of the value of a clock counter of said information processing apparatus, a reset of the value of a clock counter that counts an internal clock; and
a reset step that resets the value of said clock counter if said data is determined as said synchronization control data by the process of said data determining step.

17. A program for causing a computer to execute a process for transmitting/receiving with an information apparatus connected thereto by a network, **characterized by** comprising:
a data determining step that determines if data that is received is synchronization control data, which instructs, at the same time as a reset of the value of a clock counter of said information processing apparatus, a reset of the value of a clock counter that counts an internal clock; and
a reset step that resets the value of said clock counter if said data is determined as said synchronization control data by the process of said data determining step.
